# EUROPÄISCHE PATENTSCHRIFT

(11) **EP 2 045 618 B1**
(45) Veröffentlichungstag und Bekanntmachung des Hinweises auf die Patenterteilung: **29.03.2017**
(21) Anmeldenummer: 08105298.7
(22) Anmeldetag: 11.09.2008
(51) Int. Cl.: G01S 7/04, G01S 13/93, G08G 1/16

(54) **Fahrerassistenz-System für ein Kraftfahrzeug**
Driver assistance system for a motor vehicle
Système d'assistance au conducteur pour un véhicule automobile

(30) Priorität: 05.10.2007 DE 102007047720
(43) Veröffentlichungstag der Anmeldung: 08.04.2009
(73) Patentinhaber: Robert Bosch GmbH, 70442 Stuttgart (DE)
(72) Erfinder: Alaa El-Din, Omar, 30161 Hannover (DE); Wingbermuehle, Jochen, 30966 Hemmingen (DE); Heiler, Matthias, 8055 Zürich (CH)

(56) Entgegenhaltungen:
- EP-A- 0 464 821
- EP-A- 1 480 054
- EP-A- 1 865 479
- DE-A1- 4 319 904
- DE-A1- 19 539 799
- DE-A1- 19 826 283

## Beschreibung

Die Erfindung betrifft ein Fahrerassistenz-System für ein Kraftfahrzeug sowie ein Verfahren zur Unterstützung eines Fahrers eines Kraftfahrzeugs mittels eines solchen Systems.

### Stand der Technik

Fahrerassistenz-Systeme für Kraftfahrzeuge sind bekannt. Sie dienen der Unterstützung eines Fahrers des Kraftfahrzeugs während der Fahrt, wobei insbesondere Informationen über die Umgebung des Kraftfahrzeugs sowie über Betriebszustände des Kraftfahrzeugs verarbeitet und in einer für den Fahrer geeignet aufbereiteten Darstellung und/oder Signalisierung ausgegeben werden. Insbesondere sind videobasierte Fahrerassistenz-Systeme bekannt, die beispielsweise als Bild- oder Videoauswertung Aussagen über die Umgebung von Kraftfahrzeugen treffen. Beispielsweise können solche videobasierten Fahrerassistenz-Systeme Aussagen über das Vorhandensein und/oder die Positionierung von Hindernissen relativ zum Kraftfahrzeug treffen und für den Fahrer ersichtlich ausgeben. Derartige Systeme sind mit Unsicherheiten behaftet, und zwar sowohl hinsichtlich der Erkennung als auch der Qualifikation erkannter Objekte beispielsweise durch Objekt-Hypothesen. Beispielsweise kann eine Bild- oder Videoauswertung zu einer Aussage gelangen, wonach sich an einer Position (x, y, z) mit einer Wahrscheinlichkeit p ein Fußgänger befindet. An bestehenden Systemen ist hierbei nachteilig, dass diese Unsicherheiten nicht in geeigneter Weise an den Fahrer kommuniziert werden. Typischerweise werden nämlich, sobald eine gewisse Wahrscheinlichkeit als Schwellwert erreicht wird, beispielsweise in einem Videodisplay (nämlich einem Monitor oder einem Head-up-Display) Informationen dergestalt ausgegeben, dass die entsprechende Position des mit einiger Wahrscheinlichkeit erkannten Objektes farblich oder durch Symbole markiert wird.

Die Ja/Nein-Entscheidung dieser Schwellwertverfahren verwirft hierbei die für den Fahrer wichtige Information über die Sicherheit der Objekt-Hypothese. Ist ein solcher Schwellwert zu niedrig eingestellt, werden sehr häufig Objekte angezeigt, die tatsächlich nicht oder nicht in der angezeigten Art vorhanden sind, was bei dem Fahrer das Gefühl der Übersensitivität des Systems sowie ein andauerndes Gefühl der Störung hinterlässt und ihn letztlich dazu verleiten wird, das System nicht weiter zu verwenden. Ist der Schwellwert zu groß gewählt, werden relevante Objekte möglicherweise nicht angezeigt, was bei dem Fahrer den Eindruck der Unzuverlässigkeit des Systems hinterlässt. Entwickler und Verwender derartiger Systeme stehen insoweit vor einem Zielkonflikt, entweder einen niedrigen Schwellwert zu wählen, und hierbei die Fehlalarmierung des Fahrers in Kauf zu nehmen, oder aufgrund eher unempfindlicher Einstellung (durch einen hohen Schwellwert) das unzutreffende Nichtalarmieren bei tatsächlich vorhandenen Objekten zu riskieren.

Aus der nachveröffentlichten EP 1865479 A1 ist ein Fahrzeugumfeld-Informationssystem bekannt, bei dem ein vor dem Fahrzeug sich befindliches Hindernis erkannt und seine Positionsgenauigkeit durch ein Flächensymbol dargestellt wird. Eine verringerte Erkennungswahrscheinlichkeit wird durch ein zusätzlich eingeblendetes, ein Fragezeichen beinhaltendes Symbol dargestellt.

### Offenbarung der Erfindung

Aufgabe der Erfindung ist es, ein Fahrerassistenz-System für ein Kraftfahrzeug bereitzustellen, das insbesondere bei Bild- oder Videoauswertung die genannten Nachteile vermeidet und eine für den Fahrer die Objekthypothese, die der Objektwahrung zugrunde liegt, nachvollziehbare Darstellung aufweist.

Hierzu wird ein Fahrerassistenzsystem für ein Kraftfahrzeug vorgeschlagen, mit einer Objekterfassungseinrichtung, einer Objektauswertungseinrichtung und einer grafischen Ausgabeeinheit für den Fahrer des Kraftfahrzeugs, auf der eine Information über das Objekt dargestellt wird, wobei die Information die Informationsinhalte einer Erkennungswahrscheinlichkeit des Objekts und einer Positionsgenauigkeit des Standorts des Objekts in grafischer Form beinhaltet. Im Gegensatz zu bekannten Systemen wird dem Fahrer nicht lediglich das Vorhandensein eines Objekts an einer bestimmten Position signalisiert, sondern in der Information (durch die Signalisierung) sowohl die Erkennungswahrscheinlichkeit des Objekts (also mit welcher Wahrscheinlichkeit davon ausgegangen werden kann, dass es sich um das signalisierte Objekt handelt) als auch die Positionsgenauigkeit des Objektstandorts (also wie genau die Position des Objekts erkannt wurde) signalisiert. Der Fahrer kann hierdurch die Verlässlichkeit der Signalisierung ohne großen Aufwand beurteilen. Insbesondere wird hierbei vermieden, dass, wie dies beispielsweise in bekannten, mit Schwellwerten arbeitenden Systemen der Fall ist, ein Objekt fälschlich als vorhanden angezeigt oder fälschlich nicht angezeigt wird. Anstelle der bislang gewissermaßen binären Darstellung "Objekt vorhanden" sowie einer bloßen Positionierung des Objekts wird nunmehr dem Fahrer signalisiert, wie wahrscheinlich das Vorhandensein des bestimmten Objekts ist und wie genau beziehungsweise ungenau die Positionierung angegeben werden kann. Dies verhindert insbesondere auch im Zuge des Fahrens des Kraftfahrzeugs "springende" Darstellungen, die dadurch bei bekannten Systemen entstehen können, dass sich der Schwellwert schlagartig durch bessere Erkennungsgenauigkeit im Zuge der Bewegung des Kraftfahrzeugs ändert. Der Fahrer wird auf diese Weise nicht mehr plötzlich mit Informationen von möglicherweise fragwürdiger Zuverlässigkeit konfrontiert, sondern er kann jederzeit beurteilen, ob er sich auf die Anzeige verlassen kann und ob er sein Verhalten auf die Anzeige einstellen muss, beispielsweise durch einen Ausweichvorgang. Besonders vorteilhaft ist hierbei, dass der Fahrer nicht mehr von plötzlich auftretenden, ihn gewissermaßen alarmierenden und erschreckenden Signalisierungen verunsichert wird, sondern stattdessen im Zuge des Fahrens den graduellen Verlauf der Verlässlichkeit der Anzeige verfolgen kann.

Erfindungsgemäß ist vorgesehen, dass die Farbgebung der Information, die Helligkeit der Information, die Strichstärke der Information oder die Deutlichkeit der Darstellung der Information ein Maß für die Erkennungswahrscheinlichkeit ist. Beispielsweise kann auf einem Monitor oder Head-up-Display das erkannte Objekt bildlich dargestellt werden, wobei die Darstellung in einer nur gerade eben erkennbaren Art und Weise erfolgt, beispielsweise durch geringe Helligkeit und/oder durch geringe Konturenschärfe, sofern die Erkennungswahrscheinlichkeit nicht ausreichend hoch ist. Mit zunehmender Erkennungsgenauigkeit und mit zunehmender Wahrscheinlichkeit werden beispielsweise die Helligkeit der Information und die Konturschärfe oder Strichstärke gesteigert, bis die Information deutlich sichtbar oder auch leuchtend dargestellt wird. Je höher nämlich die Erkennungswahrscheinlichkeit des Objekts und seiner Position ist, umso höher muss der Alarmierungsgrad des Fahrers sein. Aus diesem Grunde ist hier eine sehr deutliche und klare Darstellung gewünscht, wohingegen bei der bloßen Möglichkeit im Sinne einer eher unwahrscheinlichen Möglichkeit der Fahrer lediglich darüber zu informieren ist, dass unter Umständen sich an einer bestimmten Position ein Objekt befinden könnte. Insbesondere auf Monitoren oder Head-up-Displays kann auch die Strichstärke der Information, beispielsweise bei symbolischer Darstellung, als Maß für die Erkennungswahrscheinlichkeit genutzt werden, nämlich dergestalt, dass eine große Strichstärke (also eine breitstrichige Darstellung) eine hohe Erkennungswahrscheinlichkeit bedeutet, wohingegen eine geringe Strichstärke eine geringe Erkennungswahrscheinlichkeit symbolisiert. Bevorzugt wird eine solche Symbolik verwendet, die für den Fahrer ohne Weiteres eingängig und nachvollziehbar ist, und die keine weitere Entschlüsselung durch den Fahrer benötigt.

In einer bevorzugten Ausführungsform ist die räumliche Ausdehnung der Information ein Maß für die Positionsgenauigkeit des Standorts des Objekts. Beispielsweise ist es hierbei möglich, das Objekt in einer die Position beziehungsweise die Positionsgenauigkeit symbolisierenden Art und Weise darzustellen, etwa in einem Kreis oder einem Oval, der umso weiter ausgedehnt ist, je ungenauer die Position des Objekts erkannt werden konnte. Ist die Positionsgenauigkeit des Objekts hingegen hoch, wird das Objekt sehr eng umrissen an der erkannten Position dargestellt, so dass bereits sinn- und augenfällig für den Fahrer ersichtlich ist, wie genau eine bestimmte Position des Objekts erkannt wurde, und er sich ohne weitere Überlegungen allein aufgrund der grafischen Darstellung in seinem Fahrverhalten hierauf einstellen kann.

Es wird weiter ein Verfahren zur Unterstützung eines Fahrers eines Kraftfahrzeugs vorgeschlagen, das mit einer Objekterfassungseinrichtung, einer Objektauswerteeinrichtung und einer grafischen Ausgabeeinheit für den Fahrer des Kraftfahrzeugs versehen ist, wobei auf der grafischen Ausgabeeinheit eine Information über das Objekt derart dargestellt wird, dass die Information die Informationsinhalte einer Erkennungswahrscheinlichkeit des Objekts und einer Positionsgenauigkeit des Standorts des Objekts im grafischer Form beinhaltet. Bei diesem Verfahren zur Unterstützung des Fahrers werden folglich die vorstehend bereits beschriebenen Informationsinhalte betreffend Erkennungswahrscheinlichkeit des Objekts (insbesondere nämlich darüber, wie genau die Erkennung eines bestimmten Objekts ist, also um was für ein Objekt es sich handelt) und der Positionsgenauigkeit des Standorts des Objekts (wie zuverlässig die Positionierung des Objekts bei der derzeitigen Erkennung ist) dargestellt.

In einer weiteren Ausbildung des Verfahrens ist die Farbgebung der Information, die Helligkeit der Information, die Strichstärke der Information und/oder die Deutlichkeit der Darstellung der Information ein Maß für die Erkennungswahrscheinlichkeit. Die Erkennungswahrscheinlichkeit lässt sich von dem Fahrer demzufolge unmittelbar über die genannten Größen erkennen, beispielsweise kann eine rote Darstellung der Information auf eine sehr hohe Erkennungswahrscheinlichkeit hinweisen, während eine grau-schattierte oder eine undeutliche Darstellung der Information eine geringe Erkennungswahrscheinlichkeit bezeichnet. Relevant ist, dass der Fahrer hierbei ohne weiteres Nachdenken sinnfällig aufbereitete Darstellungen unmittelbar umsetzen und für sein Fahrverhalten verwerten kann.

In einer bevorzugten Ausbildung des Verfahrens ist die räumliche Ausdehnung der Information ein Maß für die Positionsgenauigkeit des Standorts des Objekts. Insbesondere ist hierbei vorgesehen, eine eher ungenaue Positionsangabe durch eine relativ breite, weite Darstellung anzuzeigen, wodurch dem Fahrer in sinnfälliger Weise signalisiert wird, dass die Position des Objekts nicht genau bestimmt werden kann, aber wahrscheinlich in der Umgebung des angezeigten Standorts liegt. Ebenso kann durch sinnfällige Darstellung aufgezeigt werden, dass der Standort des Objekts sehr sicher erkannt wurde, so dass das Objekt sich an der angezeigten Position mit sehr hoher Wahrscheinlichkeit auch befinden wird. Dies kann beispielsweise durch eine auf engen Raum begrenzte Darstellung des Objekts erfolgen. Selbstverständlich sind hier weitere Darstellungsformen möglich; wesentlich ist, dass für den Fahrer in klar nachvollziehbarer und sinnfälliger Weise erkennbar wird, welche Größe (Erkennungswahrscheinlichkeit des Objekts und/oder Positionsungenauigkeit des Standorts des Objekts) mit welchem Grad an Wahrscheinlichkeit erkannt wurde und wie sicher er sein Fahrverhalten auf ein Vorhanden sein des dargestellten Objekts an der dargstellten Position einstellen muss.

Weitere vorteilhafte Ausführungsformen ergeben sich aus den Unteransprüchen und aus Kombinationen derselben.

Die Erfindung wird nachfolgend anhand eines Ausführungsbeispiels näher beschrieben, ohne jedoch hierauf beschränkt zu sein.

### Kurze Beschreibung der Zeichnungen

Es zeigt die
- Figur: eine Darstellung der Erkennungswahrscheinlichkeit des Objekts und der Positionsgenauigkeit des Standorts des Objekts in grafischer Form.

### Ausführungsform(en) der Erfindung

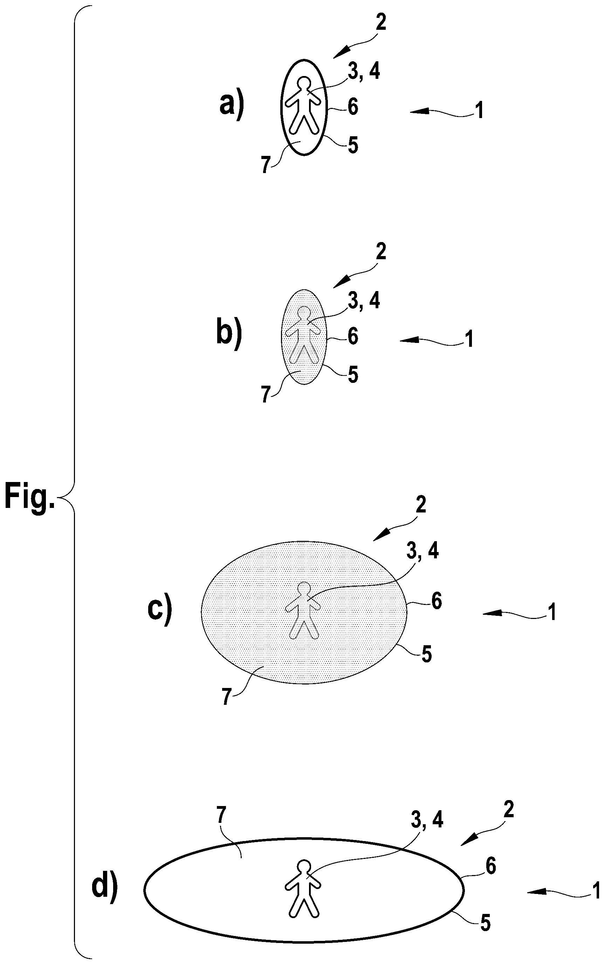

Die Figur zeigt eine Darstellung von Information 1 eines nicht dargestellten Fahrerassistenz-Systems eines Kraftfahrzeugs auf einem nicht dargestellten Display in vier verschiedenen Varianten, nämlich den Varianten a, b, c, d. Die Varianten a, b, c, und d werden auf dem nicht dargestellten Display nicht simultan, sondern alternativ beziehungsweise graduell ineinander übergehend dargestellt, jedoch zu einer bestimmten Zeit jeweils nur eine Variante. Die Information 1 weist hierbei Informationsinhalte 2 auf, die eine Erkennungswahrscheinlichkeit eines Objekts 3, nämlich beispielhaft eines Fußgängers 4, und einer Positionsgenauigkeit eines Standorts des Objekts 3 beinhaltet. Die Information 1 weist hierzu in allen Varianten a bis d eine räumliche Ausdehnung 5 auf, die ein Maß für die Positionsgenauigkeit des Standorts des Objekts 3 ist. Die Information 1 weist ferner eine Strichstärke 6 auf, bezogen auf die räumliche Ausdehnung 5 der Information 1, die ein Maß für die Erkennungswahrscheinlichkeit des Objekts 3 ist. Die Information 1 weist ferner eine Deutlichkeit der Darstellung 7 auf, die ebenfalls ein Maß für die Erkennungswahrscheinlichkeit hinsichtlich des Objekts 3 darstellt.

Die einzelnen Varianten a bis d signalisieren dem nicht dargestellten Fahrer in sinnfälliger Weise folgendes:
Variante a: Die räumliche Ausdehnung 5 der Information 1 ist klein, während die Strichstärke 6 und die Deutlichkeit der Darstellung 7 groß ist. Dies bedeutet, dass das Objekt 3 mit hoher Erkennungswahrscheinlichkeit als Fußgänger 4 erkannt wurde, und dass die Position des Objekts 3, also der Standort des erkannten Objekts 3, sicher beziehungsweise mit sehr hoher Wahrscheinlichkeit bestimmt werden konnte, die Positionsgenauigkeit des Standorts des Objekts 3 folglich hoch ist. Der Fahrer wird aufgrund dieser Darstellung erkennen, dass ein als Fußgänger 4 erkanntes Objekt 3 sich in einem räumlich eng umgrenzten, als sicher bekannten Bereich befindet, und sein Fahrverhalten entsprechend einrichten, beispielsweise ein Ausweichmanöver in Betracht ziehen oder, je nach Nähe des Objekts 3, unmittelbar ausführen.

In Variante b ist die räumliche Ausdehnung 5 der Information 1 klein, die Strichstärke 6, bezogen auf die räumliche Ausdehnung 5, aber gering und die Deutlichkeit der Darstellung 7 ebenfalls niedrig. Dies bedeutet, dass mit hoher Positionsgenauigkeit des Standorts das Objekt 3 erkannt wurde, das aber nicht sicher als Fußgänger 4 eingeordnet werden kann. Für den Fahrer bedeutet dies in sinnfälliger Weise, dass mit hoher Positionsgenauigkeit ein Objekt 3 zwar erkannt wurde, aber über die Natur des Objekts nichts Sicheres ausgesagt werden kann, wobei das Objekt 3 mit einiger, wenn auch (noch) geringer Wahrscheinlichkeit ein Fußgänger 4 ist.

In Variante c weist die Information 1 eine große räumliche Ausdehnung 5 aus, wobei die Strichstärke 6, bezogen auf die räumliche Ausdehnung 5, gering ist, und die Deutlichkeit der Darstellung 7 niedrig ausfällt. Dies bedeutet, dass mit geringer Positionsgenauigkeit des Standorts das Objekt 3 erkannt wurde, das auch nur sehr unsicher als Fußgänger 4 eingeordnet werden kann. Hier besteht für den Fahrer in sinnfälliger Weise eine Information über die Unsicherheit des Standorts des Objekts wie auch über die Einordnung des Objekts 3 als Fußgänger.

In Variante d ist die räumliche Ausdehnung 5 der Information 1 groß, wobei die Strichstärke 6 und die Deutlichkeit der Darstellung 7, bezogen auf die räumliche Ausdehnung 5, groß ist. Dies bedeutet, dass das Objekt 3 sicher als Fußgänger 4 erkannt wurde, wohingegen eine Standortbestimmung des Objekts 3 nicht sicher erfolgen konnte, die Positionsgenauigkeit des Standorts des Objekts 3 folglich (noch) gering ist.

Im weiteren Verlauf des Fahrervorganges des nicht dargestellten Kraftfahrzeugs können die Varianten a bis d ineinander übergehen; insbesondere ist es beispielsweise bei der zuletzt dargestellten Variante d möglich, dass das sicher als Fußgänger 4 erkannte Objekt 3 im Zuge des weiteren Fahrvorganges des nicht dargestellten Kraftfahrzeugs genauer positioniert werden kann, wodurch die Positionsgenauigkeit des Standorts des Objekts 3 graduell höher wird, so dass die räumliche Ausdehnung 5 der Information 1 mehr und mehr abnimmt, bis letztlich eine Darstellung wie in Variante a erreicht wird. Mit zunehmender Positionsgenauigkeit des Objekts 3 ist für den Fahrer eine zutreffende Entscheidung über eine mögliche Verhaltensweise, beispielsweise einen Ausweichvorgang, möglich. Ist beispielsweise das Objekt 3, wie in Variante d dargestellt, zwar sicher als Fußgänger 4 zu erkennen, aber seine Positionsgenauigkeit nur sehr gering (verdeutlicht durch die große räumliche Ausdehnung 5 der Information 1), wird sich der Fahrer hingegen darauf einstellen, dass sich der Fußgänger 4 möglicherweise während der Annäherung bewegt, so dass eine eindeutige Positionierung nicht möglich ist. Er wird demzufolge weniger einen Ausweichvorgang, als vielmehr eine Verlangsamung der Fahrgeschwindigkeit in Betracht ziehen.

Auf diese Weise ist für den Fahrer eine leicht nachvollziehbare, ohne Schwierigkeiten schnell erlernbare und assoziative Reaktion auf dargestellte Informationen 1 möglich. Insbesondere werden störende, plötzlich auftauchende und sich möglicherweise als fehlerhaft erweisende Warnungen vor voraus befindlichen Objekten vermieden, die den Fahrer letztlich und auf lange Sicht vom Gebrauch des Fahrerassistenz-Systems abhalten könnten. Weiter wird durch die dargestellte Darstellung der Information 1 für den Fahrer vermieden, dass Objekte aufgrund eines zu hoch eingestellten Schwellwertes des Erkennungssystems fälschlich nicht dargestellt werden.

Selbstverständlich sind auch andere Darstellungsformen möglich, beispielsweise durch die Ausgestaltung der Helligkeit der Information 1 auf dem nicht dargestellten Display. Wichtig ist allein, dass in einfacher, nachvollziehbarer Weise, bevorzugt einer solchen, die für den Fahrer assoziativ erkennbar ist, durch die gewählte Art der Darstellung ein Maß für die Erkennungswahrscheinlichkeit beziehungsweise für die Positionsgenauigkeit des Standorts des Objekts 3 gegeben wird.

## Patentansprüche

1. Fahrerassistenz-System für ein Kraftfahrzeug, mit einer Objekterfassungseinrichtung, einer Objektauswertungseinrichtung und einer grafischen Ausgabeeinheit für den Fahrer des Kraftfahrzeugs, auf der eine Information (1) über das Objekt (3) dargestellt wird, wobei die Information (1) die Informationsinhalte (2) einer Erkennungswahrscheinlichkeit des Objekts (3) und einer Positionsgenauigkeit des Standortes des Objekts (3) in grafischer Form beinhaltet, wobei die Helligkeit der Information (1), die Strichstärke (6) der Information (1) oder die Deutlichkeit der Darstellung (7) der Information (1) ein Maß für die Erkennungswahrscheinlichkeit derart ist, dass die Helligkeit der Information und die Deutlichkeit der Information mit zunehmender Erkennungswahrscheinlichkeit des Objekts gesteigert wird und/oder dass eine große Strichstärke eine hohe Erkennungswahrscheinlichkeit symbolisiert und dass eine geringe Strichstärke eine geringe Erkennungswahrscheinlichkeit symbolisiert.

2. Fahrerassistenz-System nach einem der vorhergehenden Ansprüche, **dadurch gekennzeichnet, dass** die räumliche Ausdehnung (5) der Information (1) ein Maß für die Positionsgenauigkeit des Standorts des Objekts (3) ist.

3. Verfahren zur Unterstützung eines Fahrers eines Kraftfahrzeugs, das mit einer Objekterfassungseinrichtung, einer Objektauswerteeinrichtung und einer grafischen Ausgabeeinheit für den Fahrer des Kraftfahrzeugs versehen ist, wobei auf der grafischen Ausgabeeinheit eine Information über das Objekt derart dargestellt wird, dass die Information die Informationsinhalte einer Erkennungswahrscheinlichkeit des Objekts und einer Positionsgenauigkeit des Standorts des Objekts in grafischer Form beinhaltet, wobei die Helligkeit der Information, die Strichstärke der Information oder die Deutlichkeit der Darstellung der Information ein Maß für die Erkennungswahrscheinlichkeit derart ist, dass die Helligkeit der Information und die Deutlichkeit der Information mit zunehmender Erkennungswahrscheinlichkeit des Objekts gesteigert wird und/oder dass eine große Strichstärke eine hohe Erkennungswahrscheinlichkeit symbolisiert und dass eine geringe Strichstärke eine geringe Erkennungswahrscheinlichkeit symbolisiert.

4. Verfahren nach einem der vorherigen Ansprüchen, **dadurch gekennzeichnet, dass** die räumliche Ausdehnung der Information ein Maß für die Positionsgenauigkeit des Standorts des Objekts ist.

## Claims

1. Driver assistance system for a motor vehicle, having an object sensing device, an object evaluation device and a graphical output unit for the driver of the motor vehicle, on which a piece of information (1) about the object (3) is presented, wherein the piece of information (1) contains the information content (2) of a probability of identification of the object (3) and a positional accuracy of the location of the object (3) in graphical form, wherein the brightness of the piece of information (1), the line thickness (6) of the piece of information (1) or the clarity of the presentation (7) of the piece of information (1) is a measure of the probability of identification such that the brightness of the piece of information and the clarity of the piece of information are increased as the probability of identification of the object increases and/or that a heavy line thickness symbolizes a high probability of identification and that a light line thickness symbolizes a low probability of identification.

2. Driver assistance system according to one of the preceding claims, **characterized in that** the spatial extent (5) of the piece of information (1) is a measure of the positional accuracy of the location of the object (3).

3. Method for assisting a driver of a motor vehicle that is provided with an object sensing device, an object evaluation device and a graphical output unit for the driver of the motor vehicle, wherein the graphical output unit is used to present a piece of information about the object such that the piece of information contains the information content of a probability of identification of the object and a positional accuracy of the location of the object in graphical form, wherein the brightness of the piece of information, the line thickness of the piece of information or the clarity of the presentation of the piece of information is a measure of the probability of identification such that the brightness of the piece of information and the clarity of the piece of information are increased as the probability of identification of the object increases and/or that a heavy line thickness symbolizes a high probability of identification and that a light line thickness symbolizes a low probability of identification.

4. Method according to one of the preceding claims, **characterized in that** the spatial extent of the piece of information is a measure of the positional accuracy of the location of the object.

## Revendications

1. Système d'assistance au conducteur destiné à un véhicule automobile, comportant un dispositif de détection d'objets, un dispositif d'évaluation d'objets, et une unité de sortie graphique destinée au conducteur du véhicule automobile, sur laquelle une information (1) concernant l'objet (3) est représentée, dans lequel l'information (1) contient les contenus d'information (2) d'une probabilité d'identification de l'objet (3) et une précision de position de l'emplacement de l'objet (3) sous forme graphique, dans lequel la luminosité de l'information (1), l'épaisseur de trait (6) de l'information (1) ou la netteté de la représentation (7) de l'information (1) est une mesure de la probabilité d'identification, en ce que la luminosité de l'information et la précision de l'information augmentent lorsque la probabilité d'identification de l'objet augmente et/ou en ce qu'une forte épaisseur de trait symbolise une probabilité d'identification élevée et en ce qu'une faible épaisseur de trait symbolise une faible probabilité d'identification.

2. Système d'assistance au conducteur selon l'une quelconque des revendications précédentes, **caractérisé en ce que** l'extension spatiale (5) de l'information (1) est une mesure de la précision de position de l'emplacement de l'objet (3).

3. Procédé d'assistance à un conducteur d'un véhicule automobile qui est muni d'un dispositif de détection d'objets, d'un dispositif d'évaluation d'objets, et d'une unité de sortie graphique destinée au conducteur du véhicule automobile, dans lequel une information concernant l'objet est représentée sur l'unité de sortie graphique de manière à ce que l'information contienne les contenus d'information d'une probabilité d'identification de l'objet et une précision de position de l'emplacement de l'objet sous forme graphique, dans lequel la luminosité de l'information, l'épaisseur de trait de l'information ou la netteté de la représentation de l'information est une mesure de la probabilité d'identification en ce que la luminosité de l'information et la netteté de l'information augmentent lorsque la probabilité d'identification de l'objet augmente et/ou en ce qu'une forte épaisseur de trait symbolise une probabilité d'identification élevée et en ce qu'une faible épaisseur de trait symbolise une faible probabilité d'identification.

4. Procédé selon l'une quelconque des revendications précédentes, **caractérisé en ce que** l'extension spatiale de l'information est une mesure de la précision de position de l'emplacement de l'objet.
